# EUROPEAN PATENT APPLICATION

(11) **EP 3 705 533 A1**
(43) Date of publication of application: **09.09.2020**
(21) Application number: 18872422.3
(22) Date of filing: 05.11.2018
(51) Int. Cl.: C08L 71/02, B01J 13/00, C08J 3/075, C08K 3/34, C08K 5/52

(54) **SELF-SUPPORTING HYDROGEL AND METHOD FOR PRODUCING SAME**

(30) Priority: 06.11.2017 JP 2017214002
(71) Applicant: National University Corporation Gunma University, Maebashi-shi, Gunma 371-8510 (JP)
(72) Inventor: TAKENO, Hiroyuki, Maebashi-shi Gunma 371-8510 (JP); NAGAI, Shiori, Maebashi-shi Gunma 371-8510 (JP); NAKAMURA, Arisa, Maebashi-shi Gunma 371-8510 (JP)
(74) Representative: Hoffmann Eitle
(86) International application number: PCT/JP2018/041028
(87) International publication number: WO 2019/088289

(57) **Abstract**

There is provided a polymer/nanoparticle composite hydrogel that can be produced from an industrially readily available general-purpose material and has excellent mechanical and stretching properties.

A hydrogel and a method for producing the same, the hydrogel having a self-supporting property and comprising a silicate salt (A), a polyalkylene glycol (B), and a dispersant (C) for the silicate salt, the hydrogel being characterized in that: the polyalkylene glycol (B) has a weight average molecular weight, number average molecular weight, or viscosity average molecular weight of 500,000 to 20,000,000; and the amount by mass of the polyalkylene glycol (B) is more than 2% by mass and 20% by mass or less relative to 100% by mass of the hydrogel.

## Description

### TECHNICAL FIELD

The present invention relates to a hydrogel having a self-supporting property and excellent mechanical properties, and a method for producing the hydrogel.

### BACKGROUND ART

A polymer hydrogel, which contains water as a main component, has high safety, can be produced at low cost, and imposes a small burden on the environment. Thus, a polymer hydrogel has received attention as a soft material and has been used in, for example, air fresheners, jellies, or disposable diapers.

However, many polymer hydrogels have a non-uniform structure with a non-uniform crosslink density and thus are dynamically fragile.

In view of solving such a problem in dynamic property, a polymer/nanoparticle composite hydrogel has become of interest.

Hitherto reported polymer/nanoparticle composite hydrogels having excellent dynamic properties include, for example, a nanocomposite gel prepared by radical polymerization of an acrylamide monomer in water in the presence of a layered clay mineral (Patent Document 1 and Non-Patent Document 1).

A dry clay film formed of a polyacrylic acid salt (i.e., general-purpose polymer) and clay has been known and studied for use as a surface protective material (Patent Document 2).

A hydrogel formed of polyethylene oxide and layered clay particles has also been disclosed (for example, Non-Patent Document 2).

### Prior Art Documents

### Patent Documents

Patent Document 1: Japanese Unexamined Patent Application Publication No. 2002-053629 (JP 2002-053629 A)
Patent Document 2: Japanese Unexamined Patent Application Publication No. 2009-274924 (JP 2009-274924 A)

### Non-Patent Documents

Non-Patent Document 1: K. Haraguchi, et al., Adv. Mater., 14 (16), 1120 (2002)
Non-Patent Document 2: H. A. Baghdadi, J. Parrella, S. R. Bhatia, Rheol Acta (2008) 47: 349-357

### SUMMARY OF THE INVENTION

### Problems to be Solved by the Invention

Patent Document 1 and Non-Patent Document 1 disclose a polymer/nanoparticle composite gel having excellent dynamic properties. However, the polymer/nanoparticle composite gel disclosed in these documents requires a polymerization reaction in a production process therefor.

Patent Document 2 describes preparation of a gel-like paste as an intermediate. The gel-like paste is dynamically fragile. The gel-like paste is applied onto a sheet, and the resultant dry film exhibits excellent dynamic properties.

Non-Patent Document 2 describes an improvement in the elastic modulus of a hydrogel, but does not discuss the degree of stretching of the hydrogel.

An object of the present invention is to provide a polymer/nanoparticle composite hydrogel that can be produced from an industrially readily available general-purpose material and has excellent mechanical properties. Another object of the present invention is to provide a polymer/nanoparticle composite hydrogel having excellent stretching property.

### Means for Solving the Problems

The present inventors have conducted extensive studies for solving the aforementioned problems, and as a result have found that a polymer/nanoparticle composite hydrogel having a self-supporting property and excellent mechanical properties (i.e., a stretch rate of 1,000% or more) can be produced by mixing of a polyalkylene glycol having a weight average molecular weight, number average molecular weight, or viscosity average molecular weight of 500,000 to 20,000,000, a silicate salt, and a dispersant for the silicate salt, and adjustment of the amounts of these components. The present invention has been accomplished on the basis of this finding.

Accordingly, a first aspect of the present invention is a hydrogel having a self-supporting property and comprising a silicate salt (A), a polyalkylene glycol (B), and a dispersant (C) for the silicate salt, the hydrogel being characterized in that:
the polyalkylene glycol (B) has a weight average molecular weight, number average molecular weight, or viscosity average molecular weight of 500,000 to 20,000,000, and
the amount by mass of the polyalkylene glycol (B) is more than 2% by mass and 20% by mass or less relative to 100% by mass of the hydrogel.

A second aspect of the present invention is the hydrogel having a self-supporting property according to the first aspect, wherein the silicate salt (A) is water-swellable silicate salt particles.

A third aspect of the present invention is the hydrogel having a self-supporting property according to the second aspect, wherein the water-swellable silicate salt particles are particles of a water-swellable silicate salt selected from the group consisting of smectite, bentonite, vermiculite, and mica.

A fourth aspect of the present invention is the hydrogel having a self-supporting property according to any one of the first to third aspects, wherein the polyalkylene glycol (B) is polyethylene glycol or polypropylene glycol.

A fifth aspect of the present invention is the hydrogel having a self-supporting property according to any one of the first to fourth aspects, wherein the dispersant (C) is at least one selected from the group consisting of orthophosphoric acid, pyrophosphoric acid, tripolyphosphoric acid, tetraphosphoric acid, hexametaphosphoric acid, polyphosphoric acid, etidronic acid, alendronic acid, risedronic acid, ibandronic acid, clodronic acid, minodronic acid, pamidronic acid, tiludronic acid, zoledronic acid, 1,2-ethylenediphosphonic acid, poly(meth)acrylic acid, an acrylic acid/maleic acid copolymer, or a completely neutralized or partially neutralized sodium salt, potassium salt, or ammonium salt of any of these acids or the copolymer, sodium hydroxide, hydroxylamine, sodium carbonate, sodium silicate, polyethylene glycol or polypropylene glycol having a weight average molecular weight, number average molecular weight, or viscosity average molecular weight of 200 to 20,000, sodium humate, and sodium ligninsulfonate.

A sixth aspect of the present invention is the hydrogel having a self-supporting property according to any one of the first to fifth aspects, wherein the amount by mass of the silicate salt (A) is 5% by mass to 20% by mass relative to 100% by mass of the hydrogel.

A seventh aspect of the present invention is the hydrogel having a self-supporting property according to any one of the first to sixth aspects, wherein the hydrogel further comprises an ionic liquid (D).

An eighth aspect of the present invention is a method for producing the hydrogel having a self-supporting property according to any one of the first to sixth aspects, the method comprising:
a step of mixing the silicate salt (A), the polyalkylene glycol (B), the dispersant (C), and water or a water-containing solvent; and
a step of causing gelation of the resultant mixture by allowing the mixture to stand still.

A ninth aspect of the present invention is the method for producing the hydrogel having a self-supporting property according to any one of the first to sixth aspects, the method comprising:
a step of mixing two liquids: a liquid A and a liquid B, wherein the liquid A is a mixture of the silicate salt (A), the dispersant (C), and water or a water-containing solvent, or an aqueous solution or aqueous dispersion of the mixture, and the liquid B is a mixture of the polyalkylene glycol (B) and water or a water-containing solvent, or an aqueous solution or aqueous dispersion of the mixture; and
a step of causing gelation of the resultant mixture by allowing the mixture to stand still.

A tenth aspect of the present invention is the method for producing the hydrogel having a self-supporting property according to the eighth or ninth aspect, wherein the method further comprises, after the gelation step, a step of immersing the resultant gel in a phosphate buffer.

An eleventh aspect of the present invention is the method for producing the hydrogel having a self-supporting property according to the eighth or ninth aspect, wherein the method further comprises, after the gelation step, a step of immersing the resultant gel in an ionic liquid (D).

A twelfth aspect of the present invention is the method for producing the hydrogel having a self-supporting property according to the seventh aspect, the method comprising:
a step of mixing the silicate salt (A), the polyalkylene glycol (B), the dispersant (C), the ionic liquid (D), and water or a water-containing solvent; and
a step of causing gelation of the resultant mixture by allowing the mixture to stand still.

A thirteenth aspect of the present invention is the method for producing the hydrogel having a self-supporting property according to the seventh aspect, the method comprising:
a step of mixing two liquids: a liquid A and a liquid B, wherein the liquid A is a mixture of the silicate salt (A), the dispersant (C), and water or a water-containing solvent, or an aqueous solution or aqueous dispersion of the mixture, and the liquid B is a mixture of the polyalkylene glycol (B) and water or a water-containing solvent, or an aqueous solution or aqueous dispersion of the mixture;
a step of mixing the mixture of the liquid A and the liquid B with a liquid C, which is a mixture of the ionic liquid (D) and water or a water-containing solvent, or an aqueous solution or aqueous dispersion of the mixture; and
a step of causing gelation of the resultant mixture by allowing the mixture to stand still.

A fourteenth aspect of the present invention is a stretchable hydrogel having a self-supporting property and comprising a silicate salt (A), a polyalkylene glycol (B), and a dispersant (C) for the silicate salt, wherein:
the polyalkylene glycol (B) has a weight average molecular weight, number average molecular weight, or viscosity average molecular weight of 500,000 to 20,000,000;
the amount by mass of the polyalkylene glycol (B) is more than 2% by mass and 20% by mass or less relative to 100% by mass of the hydrogel; and
a quadrangular prism product formed of the hydrogel and having a length of 50 mm or 40 mm, a width of 15 mm, and a thickness of 1 mm can be stretched by 1.1 times or more in a longitudinal direction.

A fifteenth aspect of the present invention is a composition for forming a hydrogel having a self-supporting property, the composition comprising:
a silicate salt (A), a polyalkylene glycol (B), and a dispersant (C) for the silicate salt, wherein the polyalkylene glycol (B) has a weight average molecular weight, number average molecular weight, or viscosity average molecular weight of 500,000 to 20,000,000, and is contained at least in an amount such that when the hydrogel is formed through contact between the composition and water, the amount by mass of the polyalkylene glycol (B) is more than 2% by mass and 20% by mass or less relative to 100% by mass of the hydrogel.

### Effects of the Invention

According to the present invention, a hydrogel having a high stretch rate and a self-supporting property can be provided by mixing a polyalkylene glycol having a weight average molecular weight, number average molecular weight, or viscosity average molecular weight of 500,000 to 20,000,000, a silicate salt, and a dispersant for the silicate salt so that the proportion of each component falls within a specific range.

The present invention can provide a hydrogel having a high stretch rate and a self-supporting property by using, as the silicate salt (A), water-swellable silicate salt particles, and by selecting the water-swellable silicate salt particles from particles of various water-swellable silicate salts, including smectite, bentonite, vermiculite, and mica.

The present invention can also provide a hydrogel having a high stretch rate and a self-supporting property by using, as the polyalkylene glycol (B), polyethylene glycol or polypropylene glycol.

The present invention can also provide a hydrogel having a high stretch rate and a self-supporting property by selecting the dispersant (C) from various dispersants, including orthophosphoric acid, pyrophosphoric acid, tripolyphosphoric acid, tetraphosphoric acid, hexametaphosphoric acid, polyphosphoric acid, etidronic acid, alendronic acid, risedronic acid, ibandronic acid, clodronic acid, minodronic acid, pamidronic acid, tiludronic acid, zoledronic acid, 1,2-ethylenediphosphonic acid, poly(meth)acrylic acid, an acrylic acid/maleic acid copolymer, or a completely neutralized or partially neutralized sodium salt, potassium salt, or ammonium salt of any of these acids or the copolymer, sodium hydroxide, hydroxylamine, sodium carbonate, sodium silicate, polyethylene glycol or polypropylene glycol having a weight average molecular weight, number average molecular weight, or viscosity average molecular weight of 200 to 20,000, sodium humate, and sodium ligninsulfonate.

The present invention can also provide a hydrogel having a high stretch rate and a self-supporting property by incorporating the silicate salt (A) in an amount by mass of 5% by mass to 20% by mass relative to 100% by mass of the hydrogel.

The present invention can provide a hydrogel having a self-supporting property by mixing a polyalkylene glycol having a molecular weight of 500,000 to 20,000,000, a silicate salt, a dispersant for the silicate salt, and an ionic liquid.

According to the present invention, a hydrogel having a high stretch rate and a self-supporting property can be produced by a production method comprising a step of mixing the silicate salt (A), the polyalkylene glycol (B), the dispersant (C), and water or a water-containing solvent; and a step of causing gelation of the resultant mixture by allowing the mixture to stand still.

Alternatively, a hydrogel having a high stretch rate and a self-supporting property can be produced by a production method comprising a step of mixing two liquids: a liquid A and a liquid B, wherein the liquid A is a mixture of the silicate salt (A), the dispersant (C), and water or a water-containing solvent, or an aqueous solution or aqueous dispersion of the mixture, and the liquid B is a mixture of the polyalkylene glycol (B) and water or a water-containing solvent, or an aqueous solution or aqueous dispersion of the mixture; and a step of causing gelation of the resultant mixture by allowing the mixture to stand still.

Also, a hydrogel having a high stretch rate and a self-supporting property can be produced by the production method of the present invention comprising, after the gelation step, a step of immersing the resultant gel in a phosphate buffer or in an ionic liquid (D).

According to the present invention, a hydrogel having a high stretch rate and a self-supporting property can be produced by a production method comprising a step of mixing the silicate salt (A), the polyalkylene glycol (B), the dispersant (C), the ionic liquid (D), and water or a water-containing solvent; and a step of causing gelation of the resultant mixture by allowing the mixture to stand still.

Alternatively, a hydrogel having a high stretch rate and a self-supporting property can be produced by a production method comprising a step of mixing two liquids: a liquid A and a liquid B, wherein the liquid A is a mixture of the silicate salt (A), the dispersant (C), and water or a water-containing solvent, or an aqueous solution or aqueous dispersion of the mixture, and the liquid B is a mixture of the polyalkylene glycol (B) and water or a water-containing solvent, or an aqueous solution or aqueous dispersion of the mixture; a step of mixing the mixture of the liquid A and the liquid B with a liquid C, which is a mixture of the ionic liquid (D) and water or a water-containing solvent, or an aqueous solution or aqueous dispersion of the mixture; and a step of causing gelation of the resultant mixture by allowing the mixture to stand still.

The stretchable hydrogel of the present invention can be stretched by 1.1 times or more in a longitudinal direction.

The hydrogel-forming composition of the present invention can produce a hydrogel having a high stretch rate and a self-supporting property.

### BRIEF DESCRIPTION OF THE DRAWINGS

[FIG. 1] FIG. 1 shows the appearance of a sample of Example 1 (hydrogel molded product).
[FIG. 2] FIG. 2 shows the appearance of the sample of Example 1: (a) before a tensile test, and (b) after the tensile test.
[FIG. 3] FIG. 3 shows the results of measurement of a change in stress in Examples 1 and 2.
[FIG. 4] FIG. 4 shows the results of measurement of a change in stress in Examples 3 and 4.
[FIG. 5] FIG. 5 shows the results of measurement of a change in stress in Examples 5 and 1.
[FIG. 6] FIG. 6 shows the results of measurement of a change in stress in Examples 6 and 7.
[FIG. 7] FIG. 7 shows the results of measurement of a change in stress in Example 9.
[FIG. 8] FIG. 8 shows the results of small angle X-ray scattering (SAXS) measurement under stretching in Example 10: (a) stretch ratio of 1, (b) stretch ratio of 5, and (c) stretch ratio of 21.
[FIG. 9] FIG. 9 shows a change in frequency over time in QCM measurement in Referential Examples 1 and 2.
[FIG. 10] FIG. 10 shows the results of measurement of a change in stress in Examples 11 to 14, Comparative Example 3, and Examples 1 and 5.
[FIG. 11] FIG. 11 shows the results of measurement of a change in stress in Examples 15 and 5.
[FIG. 12] FIG. 12 shows the appearance of a sample of Example 16 (hydrogel molded product).
[FIG. 13] FIG. 13 shows the results of measurement of a change in stress in Examples 16 and 5.

### MODES FOR CARRYING OUT THE INVENTION

The term "self-supporting property" of a structure generally refers to the case where, even after removal of a solid substrate (support), the structure maintains the same three-dimensional form as before removal of the solid substrate.

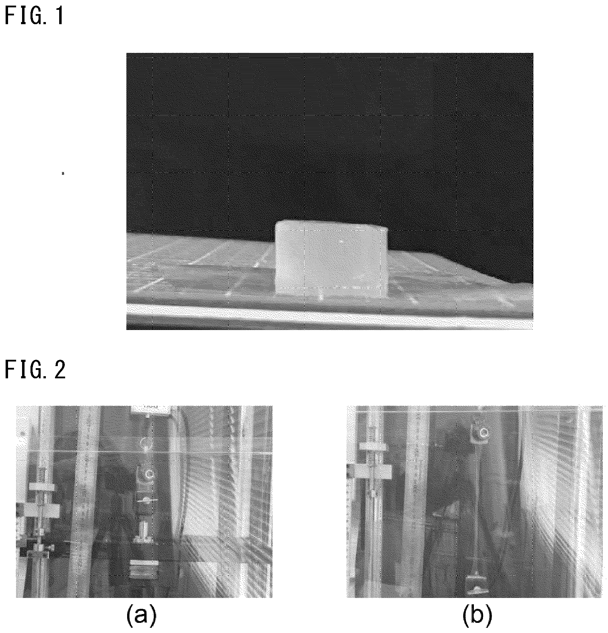

As used herein, the term "hydrogel having a self-supporting property" refers to the case where, as described below, a hydrogel formed by adding, into a predetermined mold, a mixture of components (A) to (C), an optional component (D) and an additional component, and water or a water-containing solvent, and then allowing the mixture to stand still whereby to form the hydrogel maintains its form without disintegration even after removal of the gel from the mold (see, for example, a photograph of the appearance of a test sample of Example 1 shown in FIG. 1 as described below).

The elastic modulus of the hydrogel can be used as an exemplary index of the self-supporting property of the hydrogel. Theoretically, the hydrogel has a self-supporting property when the infinite time elastic modulus is a finite value.

The elastic modulus of the hydrogel of the present invention can be measured with, for example, a uniaxial compression measuring apparatus. For example, a cylindrical hydrogel having a diameter of 14 mm and a height of 8 mm is prepared, and the elastic modulus of the hydrogel can be measured with a load tester model 1305NR and a load measuring amplifier FA1015B available from Aikoh Engineering Co., Ltd. For determination of the elastic modulus, the hydrogel is compressed at a rate of 10 mm/sec, and stresses are measured at strain rates of 50% and 80%. A stress-strain curve is prepared from the results of the measurement, and the elastic modulus can be determined from the gradient of a region of the stress-strain curve where the strain rate is low (in the case of, for example, a hydrogel formed of 10 wt% LAPONITE XLG/3.5 wt% PEG (molecular weight: 4,000,000)/0.25 wt% TSPP/water, the elastic modulus is determined to be 8,179 Pa from a stress of 4,127 Pa measured at 50% strain and a stress of 50,419 Pa measured at 80% strain).

In the present invention, the elastic modulus of the hydrogel, which is determined with a uniaxial compression measuring apparatus, may vary depending on the amounts of components used and the compositional proportions of the components. The elastic modulus is, for example, 0.1 to 5,000 kPa, for example, 50 to 5,000 kPa, for example, 100 to 5,000 kPa, preferably 0.5 to 2,500 kPa, most preferably 0.5 to 500 kPa.

The hydrogel of the present invention contains a silicate salt (A), a polyalkylene glycol (B), and a dispersant (C) for the silicate salt. The hydrogel may further contain an ionic liquid (D) and any other optional component, so long as the effects of the present invention are not impaired.

### [Hydrogel]

### <Component (A): Silicate Salt>

The component (A) of the present invention is a silicate salt, preferably water-swellable silicate salt particles.

Examples of the silicate salt (A) include smectite, bentonite, vermiculite, and mica. The silicate salt (A) preferably forms a colloid with water or a water-containing solvent serving as a dispersion medium. The term "smectite" is a name of the group including montmorillonite, beidellite, nontronite, saponite, hectorite, and stevensite.

Primary particles of the silicate salt are in, for example, a disc-like, plate-like, spherical, particulate, cubic, acicular, rod-like, or amorphous form. The silicate salt is preferably in the form of disk-like or plate-like particles having a diameter of 5 nm to 1,000 nm.

Preferred specific examples of the silicate salt include layered silicate salts. Examples of readily available commercial products include LAPONITE (registered trademark) XLG (synthetic hectorite), LAPONITE XLS (synthetic hectorite containing sodium pyrophosphate as a dispersant), LAPONITE XL21 (sodium magnesium fluorosilicate), LAPONITE RD (synthetic hectorite), LAPONITE RDS (synthetic hectorite containing an inorganic polyphosphate salt as a dispersant), LAPONITE S482 (synthetic hectorite containing a dispersant), and LAPONITE EP (organic modified hectorite) manufactured by BYK Additives; KUNIPIA (registered trademark of Kunimine Industries Co., Ltd., montmorillonite), SUMECTON (registered trademark of Kunimine Industries Co., Ltd.) SA (synthetic saponite), SUMECTON ST (synthetic stevensite), SUMECTON SWN (synthetic hectorite), and SUMECTON SWF (fluorosynthetic hectorite) manufactured by Kunimine Industries Co., Ltd.; and BEN-GEL (registered trademark of HOJUN Co., Ltd., a purified product of natural bentonite) manufactured by HOJUN Co., Ltd.

The amount of the silicate salt (A) is preferably 5% by mass to 20% by mass (e.g., 5% by mass to 15% by mass), more preferably 7% by mass to 12% by mass, relative to 100% by mass of the hydrogel.

### <Component (B): Polyalkylene Glycol>

The component (B) of the present invention is a polyalkylene glycol. The polyalkylene glycol (may also be referred to as "polyalkylene oxide") is, for example, polyethylene glycol or polypropylene glycol.

The polyalkylene glycol (B) has a weight average molecular weight, number average molecular weight, or viscosity average molecular weight of 500,000 to 20,000,000, more preferably 1,000,000 to 15,000,000, still more preferably 1,000,000 to 10,000,000. The weight average molecular weight and the number average molecular weight are determined by gel permeation chromatography (GPC) in terms of polystyrene. When the weight average molecular weight, number average molecular weight, or viscosity average molecular weight of the polyalkylene glycol (B) is below 500,000, a hydrogel may fail to be formed.

When a commercially available product is used as the polyalkylene glycol (B), the weight average molecular weight, number average molecular weight, or viscosity average molecular weight indicated on the commercially available product is 500,000 to 20,000,000, more preferably 1,000,000 to 15,000,000, still more preferably 1,000,000 to 10,000,000.

The amount of the polyalkylene glycol (B) is more than 2% by mass and 20% by mass or less, preferably more than 2% by mass and 10% by mass or less, for example, 2.5% by mass to 5% by mass, relative to 100% by mass of the hydrogel.

### <Component (C): Dispersant for Silicate Salt>

The component (C) of the present invention is a dispersant for the silicate salt (B), preferably a dispersant for water-swellable silicate salt particles.

When only the polyalkylene glycol (A) and the silicate salt (B) are mixed in water or a water-containing solvent without use of the dispersant, the resultant hydrogel may lack a stretching property.

The dispersant (C) may be a dispersant or deflocculant used for the purpose of improvement of the dispersibility of a silicate salt or exfoliation of a layered silicate salt.

Examples of the dispersant (C) include orthophosphoric acid, pyrophosphoric acid (diphosphoric acid), tripolyphosphoric acid, tetraphosphoric acid, hexametaphosphoric acid, polyphosphoric acid, etidronic acid, alendronic acid, risedronic acid, ibandronic acid, clodronic acid, minodronic acid, pamidronic acid, tiludronic acid, zoledronic acid, 1,2-ethylenediphosphonic acid, poly(meth)acrylic acid, an acrylic acid/maleic acid copolymer, or a completely neutralized or partially neutralized sodium salt, potassium salt, or ammonium salt of any of these acids or the copolymer, sodium hydroxide, hydroxylamine, sodium carbonate, sodium silicate, polyethylene glycol or polypropylene glycol having a weight average molecular weight, number average molecular weight, or viscosity average molecular weight of 200 to 20,000, sodium humate, and sodium ligninsulfonate.

Of these, sodium diphosphate and tetrasodium etidronate are preferred.

The amount of the dispersant (C) for the silicate salt may be 0.001% by mass to 20% by mass, and is preferably 0.01% by mass to 10% by mass, more preferably 0.1% by mass to 2.0% by mass, relative to 100% by mass of the hydrogel.

In the present invention, when the component (A) is a dispersant-containing silicate salt (e.g., a commercially available product), the component (C) (i.e., dispersant) is not necessarily incorporated.

### <Component (D): Ionic Liquid>

The hydrogel of the present invention may contain an ionic liquid as the component (D).

The ionic liquid used in the present invention may be a generally known "ionic liquid." For example, the ionic liquid is composed of a cation selected from the group consisting of imidazolium, pyridinium, piperidinium, pyrrolidinium, phosphonium, ammonium, and sulfonium, and an anion selected from the group consisting of halogen, carboxylate, sulfate, sulfonate, thiocyanate, nitrate, aluminate, borate, phosphate, amide, antimonate, imide, and methide.

Examples of the cationic species include 1,3-dialkylimidazolium ion, 1,2,3-trialkylimidazolium ion, N-alkylpyridinium ion, N-alkylpyrrolidinium, tetraalkylammonium ion, tetraalkylphosphonium ion, and trialkylsulfonium ion.

Examples of the anionic species include halide ion (e.g., Cl⁻, Br⁻, or I⁻), tetrafluoroborate (BF₄⁻) ion, hexafluorophosphate (PF₆⁻) ion, trifluoromethanesulfonate (CF₃SO₃⁻) ion, hexafluoroantimonate (SbF₆⁻) ion, bis(trifluoromethylsulfonyl)imide ((CF₃SO₂)₂N⁻) ion, bis(fluorosulfonyl)imide ((FSO₂)₂N⁻) ion, tris(trifluoromethylsulfonyl)methide ((CF₃SO₂)₃C⁻) ion, nitrate (NO₃⁻) ion, trifluoromethylcarboxylate (CF₃CO₂⁻) ion, carboxylate (CH₃CO₂⁻) ion, and chloroaluminate (Al₂Cl₇⁻) ion.

Of these, 1-methyl-3-propylimidazolium=iodide (MPII) is preferred.

The amount of the ionic liquid (D) may be 0.001% by mass to 20% by mass, for example, 0.01% by mass to 10% by mass, or 0.1% by mass to 2.0% by mass, relative to 100% by mass of the hydrogel.

### <Additional Component>

The hydrogel of the present invention may contain an alcohol.

The alcohol is preferably a water-soluble alcohol that is freely dissolved in water, more preferably a C₁₋₈ alcohol. Specific examples of the alcohol include methanol, ethanol, 2-propanol, i-butanol, pentanol, hexanol, 1-octanol, and isooctanol.

A preferred combination of the silicate salt (A), the polyalkylene glycol (B), and the dispersant (C) is such that the component (A) is water-swellable smectite in an amount of 5% by mass to 15% by mass relative to 100% by mass of the hydrogel, the component (B) is polyethylene glycol or polypropylene glycol having a weight average molecular weight, number average molecular weight, or viscosity average molecular weight of 500,000 to 20,000,000 in an amount of more than 2% by mass and 10% by mass or less relative to 100% by mass of the hydrogel, and the component (C) is sodium diphosphate or tetrasodium etidronate in an amount of 0.01% by mass to 10% by mass relative to 100% by mass of the hydrogel.

A more preferred combination of the components (A) to (C) is such that the component (A) is water-swellable smectite in an amount of 7% by mass to 12% by mass relative to 100% by mass of the hydrogel, the component (B) is polyethylene glycol or polypropylene glycol having a weight average molecular weight, number average molecular weight, or viscosity average molecular weight of 500,000 to 20,000,000 in an amount of 2.5% by mass to 5% by mass relative to 100% by mass of the hydrogel, and the component (C) is sodium diphosphate or tetrasodium etidronate in an amount of 0.1% by mass to 2.0% by mass relative to 100% by mass of the hydrogel.

When the ionic liquid (D) is incorporated, a preferred combination of the silicate salt (A), the polyalkylene glycol (B), the dispersant (C), and the ionic liquid (D) is such that the component (A) is water-swellable smectite in an amount of 5% by mass to 15% by mass relative to 100% by mass of the hydrogel, the component (B) is polyethylene glycol or polypropylene glycol having a weight average molecular weight, number average molecular weight, or viscosity average molecular weight of 500,000 to 20,000,000 in an amount of more than 2% by mass and 10% by mass or less relative to 100% by mass of the hydrogel, the component (C) is sodium diphosphate or tetrasodium etidronate in an amount of 0.01% by mass to 10% by mass relative to 100% by mass of the hydrogel, and the component (D) is 1-methyl-3-propylimidazolium=iodide in an amount of 0.01% by mass to 10% by mass relative to 100% by mass of the hydrogel.

A more preferred combination of the components (A) to (D) is such that the component (A) is water-swellable smectite in an amount of 7% by mass to 12% by mass relative to 100% by mass of the hydrogel, the component (B) is polyethylene glycol or polypropylene glycol having a weight average molecular weight, number average molecular weight, or viscosity average molecular weight of 500,000 to 20,000,000 in an amount of 2.5% by mass to 5% by mass relative to 100% by mass of the hydrogel, the component (C) is sodium diphosphate or tetrasodium etidronate in an amount of 0.1% by mass to 2.0% by mass relative to 100% by mass of the hydrogel, and the component (D) is 1-methyl-3-propylimidazolium=iodide in an amount of 0.1% by mass to 2.0% by mass relative to 100% by mass of the hydrogel.

[Hydrogel Having Self-Supporting Property and Production Method Therefor]

The hydrogel having a self-supporting property of the present invention can be produced by mixing the components (A) to (C) and optionally the component (D) and an additional component with water or a water-containing solvent, and then causing gelation of the resultant mixture by allowing the mixture to stand still.

The present invention is also directed to a hydrogel-forming composition containing the silicate salt (A), the polyalkylene glycol (B), and the dispersant (C) for the silicate salt, wherein the polyalkylene glycol (B) has a weight average molecular weight, number average molecular weight, or viscosity average molecular weight of 500,000 to 20,000,000, and is contained at least in an amount such that when a hydrogel is formed through contact between the composition and water, the amount by mass of the polyalkylene glycol (B) is more than 2% by mass and 20% by mass or less relative to 100% by mass of the hydrogel.

The hydrogel of the present invention may be formed by a method involving, for example, mixing of a mixture of two components of the components (A) to (C) [i.e., components contained in the hydrogel-forming composition] and water or a water-containing solvent, or an aqueous solution or aqueous dispersion of the mixture with a mixture of the remaining one component and water or a water-containing solvent, or an aqueous solution or aqueous dispersion of the mixture.

From the viewpoint of ease of operation, the hydrogel is particularly preferably formed by a method involving preparation of a liquid A (which is a mixture of the silicate salt (A), the dispersant (C), and water or a water-containing solvent, or an aqueous solution or aqueous dispersion of the mixture); preparation of a liquid B (which is a mixture of the polyalkylene glycol (B) and water or a water-containing solvent, or an aqueous solution or aqueous dispersion of the mixture); and gelation of the mixture of these two liquids.

When the ionic liquid (D) is incorporated, the hydrogel is preferably formed by a method involving preparation of a liquid A (which is a mixture of the silicate salt (A), the dispersant (C), and water or a water-containing solvent, or an aqueous solution or aqueous dispersion of the mixture); preparation of a liquid B (which is a mixture of the polyalkylene glycol (B) and water or a water-containing solvent, or an aqueous solution or aqueous dispersion of the mixture); mixing of these two liquids; preparation of a liquid C (which is a mixture of the ionic liquid (D) and water or a water-containing solvent, or an aqueous solution or aqueous dispersion of the mixture); mixing of the liquid C with the mixture of the liquid A and the liquid B; and gelation of the resultant mixture. Water or a water-containing solvent may optionally be added, after mixing the mixture of two liquids (i.e., the liquid A and the liquid B) with the liquid C, to the mixture to thereby adjust the concentration of each component.

The dispersibility of the silicate salt (A) is further improved by preparing the liquid A as follows: the dispersant (C) is first mixed with water or a water-containing solvent, and then the silicate salt (A) is added to and mixed with the resultant mixture.

The components of the hydrogel-forming composition can be mixed by mechanical or manual stirring, or ultrasonic treatment, and preferably mixed by mechanical stirring. The mechanical stirring can be performed with, for example, a magnetic stirrer, a propeller-type stirrer, a planetary centrifugal mixer, a disper, a homogenizer, a shaker, a vortex mixer, a ball mill, a kneader, a line mixer, or an ultrasonic oscillator.

The temperature during mixing is the freezing point to the boiling point of the aqueous solution or the aqueous dispersion, preferably -5°C to 100°C, more preferably 0°C to 50°C.

When bubbles are generated immediately after completion of the mixing, the bubbles are preferably removed with a centrifuge. The bubbles are removed with a centrifuge for, for example, 10 minutes to 20 minutes.

Although the mixture has low strength and is in the form of paste immediately after completion of the mixing, the mixture gelates after being allowed to stand still. The mixture is preferably allowed to stand still for 2 hours to 100 hours. The mixture is allowed to stand still at a temperature of -5°C to 100°C, preferably 0°C to 50°C. When the mixture is poured into a mold or subjected to extrusion molding immediately after completion of the mixing and before gelation, the mixture can be formed into a gel having any desired shape.

In the production method, the aforementioned gelation step may be followed by a step of immersing the resultant gel in a phosphate buffer. No limitation is imposed on the phosphate buffer, and it may be, for example, a commonly used one. The gel is generally immersed in a phosphate buffer at 5 to 40°C and allowed to stand still therein for 5 minutes to 24 hours.

In the production method, the aforementioned gelation step may be followed by a step of immersing the resultant gel in an ionic liquid (D). The ionic liquid (D) may be any of those exemplified above. The gel is generally immersed in an ionic liquid at 5 to 40°C and allowed to stand still therein for 5 minutes to 24 hours.

### [Stretchable Hydrogel]

The present invention is also directed to a stretchable hydrogel having a self-supporting property and containing a silicate salt (A), a polyalkylene glycol (B), and a dispersant (C) for the silicate salt, wherein the hydrogel can be stretched by 1.1 times or more in a longitudinal direction.

The silicate salt (A), the polyalkylene glycol (B), and the dispersant (C) for the silicate salt may be compounds exemplified above in <Component (A): Silicate Salt (A)>, <Component (B): Polyalkylene Glycol (B)>, and <Component (C): Dispersant (C) for Silicate Salt>. Preferred combinations and amounts of these components are as described above.

When the stretchable hydrogel of the present invention is formed into a quadrangular prism product having a length of 50 mm, a width of 15 mm, and a thickness of 1 mm, the hydrogel product can be stretched by 1.1 times or more in a longitudinal direction.

Preferably, the hydrogel product can be stretched by 1.2 times or more in a longitudinal direction, can be stretched by 1.5 times or more in a longitudinal direction, can be stretched by 2 times or more in a longitudinal direction, can be stretched by 3 times or more in a longitudinal direction, can be stretched by 5 times or more in a longitudinal direction, can be stretched by 8 times or more in a longitudinal direction, or can be stretched by 10 times or more in a longitudinal direction. Most preferably, the hydrogel product can be stretched by 12 times or more in a longitudinal direction.

The degree of stretching (tensile stretch rate) can be measured by a uniaxial stretching test (tensile test). For example, a quadrangular prism hydrogel sample having a length of 50 mm or 40 mm, a width of 15 mm, and a thickness of 1 mm is prepared and then allowed to stand still at about 24°C for two to seven days. Thereafter, the sample is stretched with TENSILE TESTER STM-20 available from ORIENTEC CORPORATION at a stretching rate of 10 mm/min.

The tensile stretch rate (degree of stretching) (%) can be calculated from the maximum distance between chucks for the sample when the sample is stretched to the limit of the apparatus (i.e., the maximum stretching length of the sample) and the initial distance between the chucks (i.e., the initial length of the sample) by use of the following formula:
the tensile stretch rate (degree of stretching) (%) = [(the maximum distance - the initial distance)/the initial distance] × 100.

If the sample is broken in the process of stretching, the stretch rate can be calculated by replacing the maximum distance with "the distance at break."

The stretchable hydrogel of the present invention can be produced in the same manner as described above in [Hydrogel Having Self-Supporting Property and Production Method Therefor]. From the viewpoint of ease of operation, the hydrogel is preferably produced by a method involving mixing of a liquid A (which is a mixture of the silicate salt (A), the dispersant (C), and water or a water-containing solvent, or an aqueous solution or aqueous dispersion of the mixture) with a liquid B (which is a mixture of the polyalkylene glycol (B) and water or a water-containing solvent, or an aqueous solution or aqueous dispersion of the mixture); and gelation of the resultant mixture. In this case, the mixing ratio of the liquid A and the liquid B is preferably 1 : 2 to 2 : 1 by volume.

When the hydrogel contains an ionic liquid, as described above, the hydrogel is preferably produced by a method involving mixing of a liquid A (which is a mixture of the silicate salt (A), the dispersant (C), and water or a water-containing solvent, or an aqueous solution or aqueous dispersion of the mixture) with a liquid B (which is a mixture of the polyalkylene glycol (B) and water or a water-containing solvent, or an aqueous solution or aqueous dispersion of the mixture); mixing of a liquid C (which is a mixture of the ionic liquid (D) and water or a water-containing solvent, or an aqueous solution or aqueous dispersion of the mixture) prepared separately with the mixture of the liquid A and the liquid B; and gelation of the resultant mixture. In this case, the mixing ratio of the liquid A, the liquid B, and the liquid C may be, for example, 1 to 2 : 1 to 2 : 0.1 to 1 by volume.

The silicate salt (A) used in the hydrogel of the present invention (e.g., LAPONITE (registered trademark) available from BYK Additives) is in the form of disk-like particles having positively charged edges and negatively charged faces. The particles form a layered structure via sodium ions. When water is added to the LAPONITE particles, water molecules are hydrated to sodium ions, leading to exfoliation of the layered structure. The positively charged edges of the LAPONITE particles are bonded to the negatively charged faces of the LAPONITE particles by electrostatic interaction, resulting in formation of a card house structure by the LAPONITE particles, which are known to increase the viscosity of the aqueous dispersion.

The dispersant (C), such as sodium diphosphate (also called "sodium pyrophosphate"), is known to adsorb onto the positively charged edges of the LAPONITE particles, thereby promoting dispersion of the LAPONITE particles and preventing formation of a card house structure.

When the polyalkylene glycol (B) is added to a dispersion wherein the silicate salt is uniformly dispersed in water, new interaction occurs between the silicate salt and the polyalkylene glycol. The interaction probably results in construction of a uniform polyalkylene glycol/silicate salt network and formation of a polymer/nanoparticle composite hydrogel having excellent dynamic properties.

This probably leads to formation of the hydrogel of the present invention having a self-supporting property and stretchability; i.e., a stretch rate of more than 1,000%.

### Examples

The present invention will next be described in detail by way of examples, but the present invention is not limited to the following examples.

In the following examples, "% by mass" will also be referred to as "wt%."

### [Example 1: Preparation of Hydrogel Containing 10 wt% LAPONITE XLG/3.5 wt% PEG/0.25 wt% TSPP/Water]

In a test tube having an inner diameter of 8 mm, 0.0095 g of sodium diphosphate decahydrate (sodium pyrophosphate decahydrate) (TSPP) (available from Kanto Chemical Co., Inc.) was mixed with 0.8704 g of water, to thereby prepare an aqueous TSPP solution. The aqueous TSPP solution was immersed in ice water, and 0.2201 g of LAPONITE XLG (available from BYK Additives) was added to the solution in three portions. After each addition of LAPONITE XLG, the resultant mixture was stirred with an ultrasonic homogenizer for 20 seconds. After addition of the entire amount of LAPONITE XLG, the resultant mixture was further stirred with the ultrasonic homogenizer for about 20 minutes, to thereby prepare an aqueous LAPONITE XLG dispersion.

Separately, there was prepared 1.1000 g of an aqueous polyethylene glycol (PEG) solution containing 7 wt% PEG (viscosity average molecular weight: 3,500,000, available from Wako Pure Chemical Industries, Ltd.) as a polyalkylene glycol.

The aqueous LAPONITE XLG dispersion prepared as described above was gradually added to 1.1000 g of the aqueous PEG solution at room temperature, and the mixture was manually stirred with a spatula for 50 minutes to 120 minutes. Bubbles were removed from the mixture by centrifugation (7,500 rpm for 15 minutes), and then the mixture was allowed to stand still at room temperature for one week, to thereby prepare a hydrogel.

### [Comparative Example 1: Preparation of Hydrogel Containing 10 wt% LAPONITE XLG/3.5 wt% PEG/0 wt% TSPP/Water]

In Comparative Example 1, a hydrogel containing no TSPP was prepared in the same manner as in Example 1, except that TSPP was not used during preparation of the aqueous LAPONITE XLG dispersion.

### [Example 2: Preparation of Hydrogel Containing 10 wt% LAPONITE XLG/5 wt% PEG/0.25 wt% TSPP/Water]

In Example 2, a hydrogel was prepared in the same manner as in Example 1, except that the amount of PEG used was adjusted so that the resultant hydrogel had a PEG concentration of 5 wt%.

### [Example 3: Production of Hydrogel Containing 10 wt% LAPONITE XLG/3.5 wt% PEG/0.5 wt% TSPP/Water]

In Example 3, a hydrogel was prepared in the same manner as in Example 1, except that the amount of TSPP used was adjusted so that the resultant hydrogel had a TSPP concentration of 0.5 wt%.

### [Example 4: Production of Hydrogel Containing 10 wt% LAPONITE XLG/5 wt% PEG/0.5 wt% TSPP/Water]

In Example 3, a hydrogel was prepared in the same manner as in Example 1, except that the amounts of PEG and TSPP used were adjusted so that the resultant hydrogel had a PEG concentration of 5 wt% and a TSPP concentration of 0.5 wt%.

### [Evaluation of Degree of Stretching of Hydrogel]

Each of the hydrogels prepared in Examples 1 to 4 and Comparative Example 1 was subjected to a tensile test with TENSILE TESTER STM-20 available from ORIENTEC CORPORATION, to thereby measure a change in stress.

For preparation of a sample, bubbles were removed by centrifugation (7,500 rpm for 15 minutes) as described above, and then the hydrogel was added to a mold having a length of 50 mm, a width of 15 mm, and a thickness of 1 mm. Subsequently, the hydrogel was allowed to stand still at room temperature for one week, and then placed in a freezer at -20°C for 30 to 120 minutes, followed by removal of the gel from the mold. Thus, a test sample was prepared. FIG. 1 shows the appearance of the test sample of Example 1 (hydrogel molded product). Each sample maintained its initial form without disintegration at room temperature after removal of the gel from the mold; i.e., the hydrogel was found to have a self-supporting property.

Each molded sample was subjected to a tensile test (stretching rate: 10 mm/min) at room temperature (about 24°C).

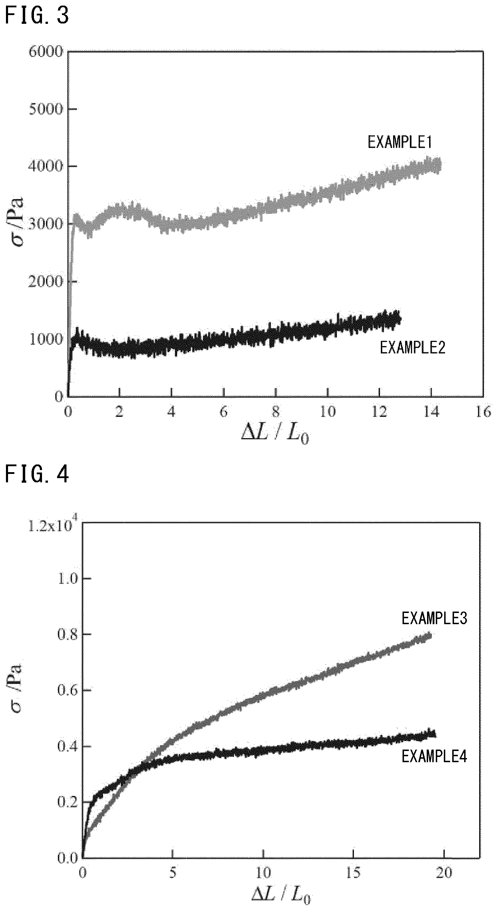

The results of measurement of a change in stress of the hydrogels of Examples 1 to 4 (stress-strain curves) are shown in FIG. 3 (Examples 1 and 2) and FIG. 4 (Examples 3 and 4). In these figures, L₀ represents natural length (the initial length of a sample), and ΔL represents an increase from the natural length. Stress σ (Pa) was determined without consideration of a change in area by stretching. FIG. 2 shows the appearance of the sample of Example 1; FIG. 2(a) shows the appearance before the tensile test, and FIG. 2(b) shows the appearance after the tensile test.

The tensile stretch rate (degree of stretching) (%) of each sample was calculated from the maximum distance between chucks for the sample when the sample was stretched to the limit of the apparatus (i.e., the maximum stretching length of the sample) and the initial distance between the chucks (i.e., the initial length of the sample) by use of the following formula (the degree of stretching is shown with "% or more" in the table below; the degree of stretching to the limit of the apparatus somewhat varies in accordance with the initial length of the sample).

The tensile stretch rate (degree of stretching) (%) = [(the maximum distance - the initial distance)/the initial distance] × 100

If the sample was broken in the process of stretching, the stretch rate was calculated by replacing the maximum distance with "the distance at break."

Table 1 shows the degree of stretching of each hydrogel and the composition of the hydrogel.

**[Table 1]**

| | Composition of hydrogel [wt%]* | | | Degree of stretching |
|---|---|---|---|---|
| | LAPONITE XLG | PEG | TSPP | |
| Comparative Example 1 | 10 | 3.5 | 0 | 16% |
| Example 1 | 10 | 3.5 | 0.25 | 1400% or more |
| Example 2 | 10 | 5 | 0.25 | 1300% or more |
| Example 3 | 10 | 3.5 | 0.5 | 1900% or more |
| Example 4 | 10 | 5 | 0.5 | 1900% or more |

| | | | | |
|---|---|---|---|---|
| *: wt% relative to 100 wt% of hydrogel | | | | |

As shown in Table 1, the hydrogels of Examples 1 to 4 were stretched to the limit of the stretching apparatus without breakage, and exhibited a degree of stretching of 1,300% or more.

In contrast, the hydrogel of Comparative Example 1 containing no TSPP was broken immediately after stretching due to separation of a surface hard phase and an internal soft phase.

### [Example 5: Production of Hydrogel Containing 10 wt% LAPONITE XLG/3.5 wt% PEG (Viscosity Average Molecular Weight: 7,700,000)/0.25 wt% TSPP/Water]

In Example 5, a hydrogel was prepared in the same manner as in Example 1, except for the use of PEG having an average molecular weight of 8,000,000 to 10,000,000 (polyethylene oxide (PEO), viscosity average molecular weight: 7,700,000, available from Sumitomo Seika Chemicals Company, Limited).

The hydrogel was tested according to the aforementioned [Evaluation of Degree of Stretching of Hydrogel], to thereby measure a change in stress and to evaluate the degree of stretching of the gel.

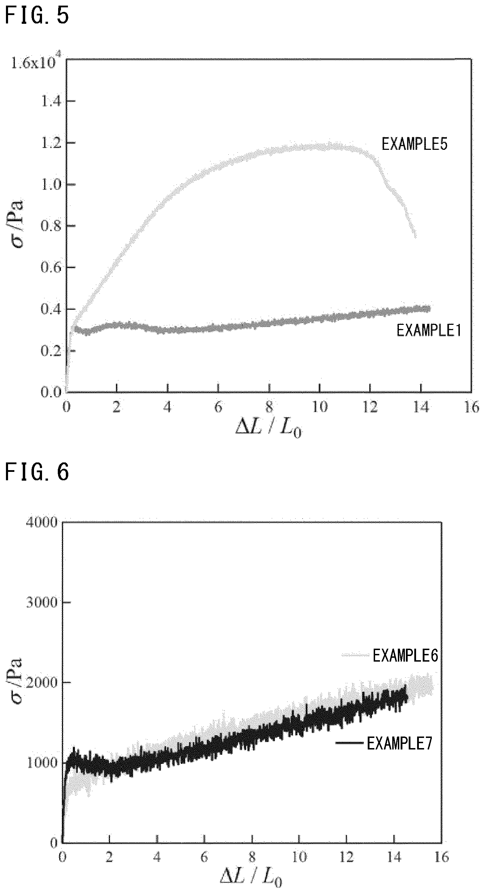

FIG. 5 shows the results of measurement of a change in stress of the hydrogel of Example 5 together with the results of Example 1.

### [Comparative Example 2: Production of Hydrogel Containing 10 wt% LAPONITE XLG/3.5 wt% PEG (Molecular Weight: 300,000)/0.25 wt% TSPP/Water]

In Comparative Example 2, an attempt was made to prepare a hydrogel in the same manner as in Example 1, except for the use of PEG having an average molecular weight of 300,000 (polyethylene oxide (PEO), average molecular weight: 300,000, available from Aldrich).

However, a gel failed to be formed in Comparative Example 2. The results indicated that formation of a gel having high degree of stretching requires the use of a polyalkylene glycol having higher molecular weight.

**[Table 2]**

| | Composition of hydrogel [wt%]* | | | Degree of stretching |
|---|---|---|---|---|
| | LAPONITE XLG | PEG | TSPP | |
| Example 5 | 10 | 3.5 (molecular weight: 7,700,000) | 0.25 | 1200% |
| Comparative Example 2 | 10 | 3.5 (molecular weight: 300,000) | 0.25 | - |

| | | | | |
|---|---|---|---|---|
| *: wt% relative to 100 wt% of hydrogel | | | | |

### [Examples 6 and 7: Production of Hydrogel Containing 10 wt% LAPONITE XLG/3.5 wt% or 5.0 wt% PEG/Water and Tetrasodium Etidronate as Dispersant]

In Examples 6 and 7, hydrogels were prepared in the same manner as in Example 1 (PEG: 3.5 wt%) and Example 2 (PEG: 5%), except that the dispersant was changed from TSPP to tetrasodium etidronate (CHELEST PH-214, available from CHELEST CORPORATION) (0.25%). The gels were evaluated in terms of a change in stress and the degree of stretching.

FIG. 6 shows the results of measurement of a change in stress of the hydrogels of Examples 6 and 7.

**[Table 3]**

| | Composition of hydrogel [wt%]* | | | Degree of stretching |
|---|---|---|---|---|
| | LAPONITE XLG | PEG | Etidronate 4Na | |
| Example 6 | 10 | 3.5 | 0.25 | 1500% or more |
| Example 7 | 10 | 5 | 0.25 | 1400% or more |

| | | | | |
|---|---|---|---|---|
| *: wt% relative to 100 wt% of hydrogel | | | | |

### [Example 8: Production of Hydrogel Containing 10 wt% LAPONITE XLG/2.5 wt% PEG/0.25 wt% TSPP/Water/Ethanol]

In a test tube having an inner diameter of 8 mm, 0.0094 g of sodium diphosphate decahydrate (sodium pyrophosphate decahydrate) (TSPP) (available from Kanto Chemical Co., Inc.) was mixed with 0.8701 g of water, to thereby prepare an aqueous TSPP solution. The aqueous TSPP solution was immersed in ice water, and 0.2202 g of LAPONITE XLG (available from BYK Additives) was added to the solution in three portions. After each addition of LAPONITE XLG, the resultant mixture was stirred with an ultrasonic homogenizer for 20 seconds. After addition of the entire amount of LAPONITE XLG, the resultant mixture was further stirred with the ultrasonic homogenizer for about 20 minutes, to thereby prepare an aqueous LAPONITE XLG dispersion.

Separately, there was prepared 1.1000 g of a polyethylene glycol (PEG)-containing water/ethanol solution (mass ratio of water and ethanol = 1 : 1) containing 7 wt% PEG (viscosity average molecular weight: 3,500,000, available from Wako Pure Chemical Industries, Ltd.) as a polyalkylene glycol.

The aqueous LAPONITE XLG dispersion prepared as described above was gradually added to 1.1000 g of the PEG-containing water/ethanol solution at room temperature, and the mixture was manually stirred with a spatula for 50 minutes to 120 minutes. Bubbles were removed by centrifugation (7,500 rpm for 15 minutes), and then the mixture was allowed to stand still at room temperature for one week and then allowed to stand still at -20°C for 30 to 120 minutes, to thereby prepare a hydrogel.

This test indicated that a hydrogel can be formed in a water/ethanol mixture system.

### [Example 9: Immersion of Hydrogel Containing 10 wt% LAPONITE XLG/3.5 wt% PEG/0.25 wt% TSPP/Water in Phosphate Buffer]

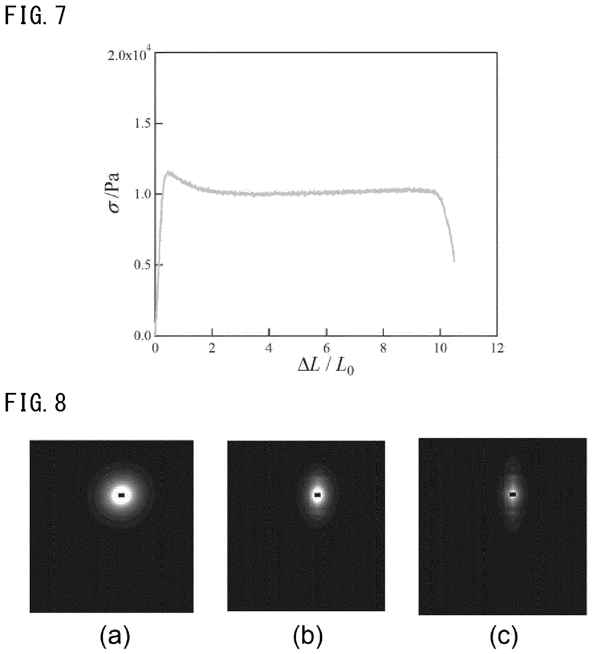

A gel was prepared in the same manner as in Example 1. The gel was added to a mold having a length of 50 mm, a width of 15 mm, and a thickness of 1 mm and molded for four days. Subsequently, the gel was removed from the mold and then immersed in a phosphate buffer (pH = 6.86) for one hour. After completion of the immersion, the gel was tested according to the aforementioned [Evaluation of Degree of Stretching of Hydrogel], to thereby measure a change in stress. The results are shown in FIG. 7.

Comparison of the results with those of the stretching test of the gel prepared in Example 1 (see FIG. 3) indicated that immersion of the gel in a phosphate buffer leads to an increase in the stretching stress of the gel.

### [Example 10: Small Angle X-ray Scattering (SAXS) Measurement]

The hydrogel prepared in Example 1 was subjected to small angle X-ray scattering (SAXS) measurement under stretching with a radiation small angle X-ray scattering apparatus (BL-6A) available from High Energy Accelerator Research Organization. Bubbles were removed from the sample by centrifugation (7,500 rpm for 15 minutes), and the sample was formed into a rectangular parallelepiped product having a length of 50 mm, a width of 15 mm, and a thickness of 1 mm.

The horizontally uniaxially stretched gel sample was subjected to small angle X-ray scattering measurement using PILATUS-1M as a detector at different stretch ratios. The results are shown in FIG. 8. An increase in stretch ratio resulted in transition of a scattering pattern in a direction vertical to the stretching direction (FIG. 8(a): stretch ratio of 1, FIG. 8(b): stretch ratio of 5, and FIG. 8(c): stretch ratio of 21). The results are probably attributed to the fact that the edges of silicate salt particles are aligned in the stretching direction, and the faces of the particles are directed to the vertical direction, whereby a silicate salt particle/PEG polymer network is constructed.

### [Referential Examples 1 and 2: Quartz Crystal Microbalance (QCM) Measurement]

QCM measurement was performed for determining the interaction between the silicate salt (A) and the polyalkylene glycol (B).

QCM measurement was performed by using a quartz resonator system QCM922A (available from SEIKO EG&G CO., LTD.), a flow cell, and a gold electrode with a resonance frequency of 9 MHz. The temperature during the measurement was controlled to 22°C, and liquids were caused to flow in the order described below at a flow rate of 30 µl/min.

An aqueous PEG solution, an aqueous LAPONITE XLG dispersion, and an aqueous LAPONITE XLG/TSPP dispersion were prepared through the procedures described in Example 1.

**[Table 4]**

| | Flow |
|---|---|
| Referential Example 1 | Distilled water → 1 wt% PEG aqueous solution → distilled water (rinse) → 1 wt% LAPONITE XLG aqueous dispersion → distilled water (rinse) |
| Referential Example 2 | Distilled water → 1 wt% PEG aqueous solution → distilled water (rinse) → 1 wt% LAPONITE XLG/0.5 wt% TSPP aqueous dispersion → distilled water (rinse) |

| | |
|---|---|
| *PEG: available from Wako Pure Chemical Industries, Ltd (average molecular weight: 300,000 to 500,000) LAPONITE XLG: available from BYK Additives TSPP: sodium pyrophosphate decahydrate, available from Kanto Chemical Co., Inc. | |

QCM measurement is used for measuring a change in mass based on the principle that a minute change in mass of a substance deposited on the surface of an electrode is proportional to a change in resonance frequency upon the resonant vibration of a quartz resonator by application of AC voltage. An increase in the mass of an electrode by adsorption of a substance onto the electrode causes a reduction in resonance frequency f.

In the Referential Examples, the adsorption of PEG and LAPONITE XLG onto an electrode by the interaction therebetween probably leads to a reduction in resonance frequency due to an increase in the mass of the electrode.

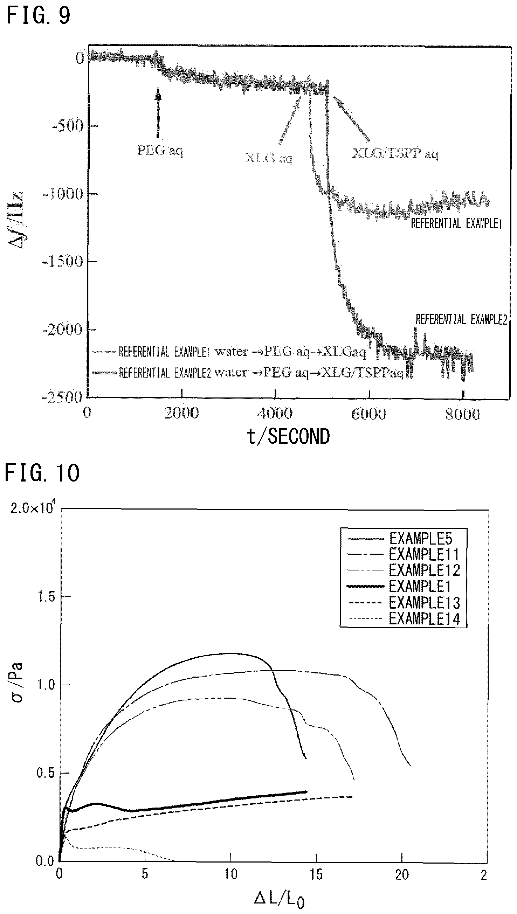

FIG. 9 shows the results of a change in frequency Δf caused by the flows in Referential Examples 1 and 2. In each of Referential Examples 1 and 2, the flow of the aqueous PEG solution led to a reduction in frequency; i.e., the PEG was found to adsorb onto the electrode. Subsequently, the flow of the aqueous XLG solution or the aqueous XLG/TSPP solution led to a significant reduction in frequency. As described above, the results suggested that LAPONITE XLG [silicate salt (A)] adsorbed onto PEG [polyalkylene glycol (B)].

### [Examples 11 to 14 and Comparative Example 3: Preparation of Hydrogel Containing 10 wt% LAPONITE XLG/3.5 wt% PEG/0.25 wt% TSPP/Water (PEG molecular weight dependence)]

In Examples 11 to 14, a hydrogel was prepared in the same manner as in Example 1, except for the use of PEG (polyethylene oxide (PEO) available from Sumitomo Seika Chemicals Company, Limited) having a viscosity average molecular weight of 4,200,000 (Example 11), 3,700,000 (Example 12), 1,800,000 (Example 13), 760,000 (Example 14), or 280,000 (Comparative Example 3). The resultant hydrogel was added to a mold having a length of 50 mm, a width of 15 mm, and a thickness of 1 mm and molded at room temperature for two days. Subsequently, the mold was placed in a freezer at -20°C for 30 to 120 minutes, and then the gel was removed from the mold. Thus, a test sample was prepared.

The sample was tested according to the aforementioned [Evaluation of Degree of Stretching of Hydrogel], to thereby measure a change in stress and to evaluate the degree of stretching of the gel.

Table 5 shows the degree of stretching of each hydrogel and the composition of the hydrogel. Table 5 also shows the results of Example 5 (viscosity average molecular weight: 7,700,000) and Example 1 (viscosity average molecular weight: 3,500,000).

FIG. 10 shows the results of measurement of a change in stress of the hydrogels of Examples 11 to 14 together with the results of Examples 1 and 5.

**[Table 5]**

| | Composition of hydrogel [wt%]* | | | Degree of stretching |
|---|---|---|---|---|
| | LAPONITE XLG | PEG (viscosity average molecular weight) | TSPP | |
| Example 5 (shown again) | 10 | 3.5 (molecular weight: 7,700,000^{a)}) | 0.25 | 1200% |
| Example 11 | 10 | 3.5 (molecular weight: 4,200,000^{a)}) | 0.25 | 1700% |
| Example 12 | 10 | 3.5 (molecular weight: 3,700,000^{a)}) | 0.25 | 1400% |
| Example 1 (shown again) | 10 | 3.5 (molecular weight: 3,500,000^{b)}) | 0.25 | 1400% or more |
| Example 13 | 10 | 3.5 (molecular weight: 1,800,000^{a)}) | 0.25 | 1700% or more |
| Example 14 | 10 | 3.5 (molecular weight: 760,000^{a)}) | 0.25 | 550% |
| Comparative Example 3 | 10 | 3.5 (molecular weight: 280,000^{a)}) | 0.25 | - |

| | | | | |
|---|---|---|---|---|
| *: wt% relative to 100 wt% of hydrogel a): available from Sumitomo Seika Chemicals Company, Limited b): available from Wako Pure Chemical Industries, Ltd. | | | | |

As shown in Table 5, the hydrogels of Examples 11 to 14 exhibited a high degree of stretching of 500% or more. In particular, the hydrogel of Example 13 was stretched to the limit of the stretching apparatus without breakage. The hydrogels of Examples 11 to 14 (molding period: two days) were found to exhibit a degree of stretching comparable to that of the hydrogel of Example 1, etc. (molding period: one week).

In contrast, a gel failed to be formed in Comparative Example 3 (using the polyethylene glycol having a viscosity average molecular weight of 280,000).

The results indicated that formation of a gel having high degree of stretching requires the use of a polyalkylene glycol having higher molecular weight.

### [Example 15: Immersion of Hydrogel Containing 10 wt% LAPONITE XLG/3.5 wt% PEG (viscosity average molecular weight: 7,700,000)/0.25 wt% TSPP/Water in Ionic Liquid (1-Methyl-3-Propylimidazolium=Iodide (MPII))]

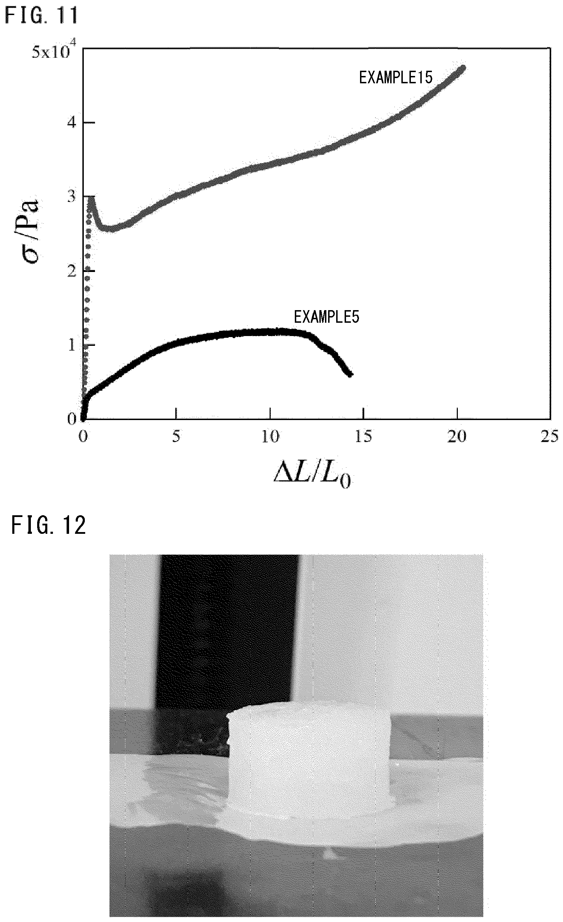

A gel was prepared in the same manner as in Example 5. The gel was added to a mold having a length of 50 mm, a width of 15 mm, and a thickness of 1 mm and molded for two days. Subsequently, the gel was removed from the mold and then immersed in the ionic liquid 1-methyl-3-propylimidazolium=iodide (MPII) for 10 minutes. After completion of the immersion, the gel was tested according to the aforementioned [Evaluation of Degree of Stretching of Hydrogel], to thereby measure a change in stress. FIG. 11 shows the results of measurement of a change in stress of the hydrogel of Example 15 together with the results of Example 5.

Table 6 shows the degree of stretching of the hydrogel of Example 15.

### [Example 16: Production of Hydrogel Containing 10 wt% LAPONITE XLG/3.5 wt% PEG (viscosity average molecular weight: 7,700,000)/0.25 wt% TSPP/1.3 wt% MPII/Water]

To a vial was added 0.0092 g of sodium diphosphate decahydrate (sodium pyrophosphate decahydrate) (TSPP) (available from Kanto Chemical Co., Inc.) and 0.8706 g of water, and they were mixed with a stirring bar, to thereby prepare an aqueous TSPP solution. 0.2200 g of LAPONITE XLG (available from BYK Additives) was gradually added with a spatula to the aqueous TSPP solution, and the resultant mixture was stirred for 25 minutes, to thereby prepare an aqueous LAPONITE XLG dispersion.

Separately, there was prepared 0.7701 g of an aqueous polyethylene glycol (PEG) solution containing 10 wt% PEG (viscosity average molecular weight: 7,700,000, polyethylene oxide (PEO) available from Sumitomo Seika Chemicals Company, Limited) as a polyalkylene glycol.

The aqueous LAPONITE XLG dispersion prepared as described above was gradually added to 0.7701 g of the aqueous PEG solution at room temperature, and the mixture was manually stirred with a spatula for 25 minutes. To the mixture was added 0.2788 g of a mixture of 10 wt% 1-methyl-3-propylimidazolium=iodide (MPII)/water (mass ratio of water and MPII = 9 : 1) in six portions. After each addition of the MPII/water mixture, the resultant mixture was stirred with a spatula until homogeneity was achieved. Subsequently, 0.0532 g of water was added to the mixture with a pipette, and the mixture was stirred with a spatula. After removal of bubbles with a centrifuge (7,500 rpm for 15 minutes), the mixture was added to a mold having a length of 50 mm, a width of 15 mm, and a thickness of 1 mm, and then molded by allowing it to stand still at room temperature for two days. Subsequently, the mold was placed in a freezer at -20°C for 30 to 120 minutes, and then the gel was removed from the mold, to thereby prepare a test sample. FIG. 12 shows the appearance of the test sample of Example 16 (molded hydrogel sample). The sample maintained its initial form without disintegration at room temperature after removal of the gel from the mold; i.e., the hydrogel was found to have a self-supporting property.

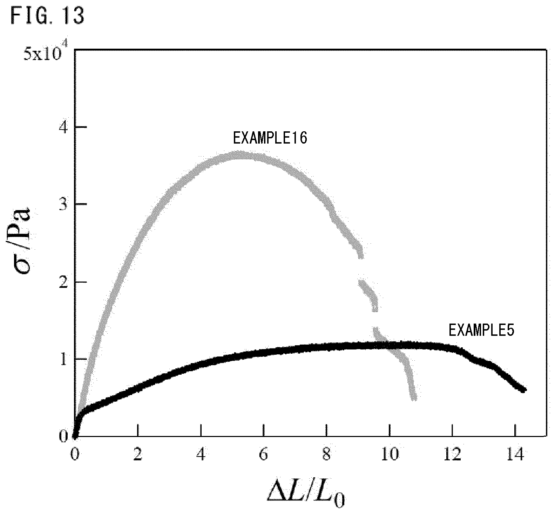

The sample was tested according to the aforementioned [Evaluation of Degree of Stretching of Hydrogel], to thereby measure a change in stress. FIG. 13 shows the results of measurement of a change in stress of the hydrogel of Example 16 together with the results of Example 5. The final concentration of 1-methyl-3-propylimidazolium=iodide (MPII) was 1.3 wt%.

Table 6 shows the degree of stretching of the hydrogel of Example 16.

**[Table 6]**

| | Composition of hydrogel* | Degree of stretching |
|---|---|---|
| Example 5 (shown again) | 10 wt% LAPONITE XLG/3.5 wt% PEG/0.25 wt% TSPP/Water | 1200% |
| Example 15 | 10 wt% LAPONITE XLG/3.5 wt% PEG/0.25 wt% TSPP/Water + immersion of hydrogel in ionic liquid (MPII) | 2000% or more |
| Example 16 | 10 wt% LAPONITE XLG/3.5 wt% PEG/0.25 wt% TSPP/1.3 wt% MPII/Water | 540% |

| | | |
|---|---|---|
| *: wt% relative to 100 wt% of hydrogel | | |

As shown in Table 6 and FIG. 11, the hydrogel immersed in the ionic liquid (MPII) (Example 15) exhibited a high degree of stretching. Comparison of the results with those of the stretching test of the gel prepared in Example 5 indicated that immersion of the gel in the ionic liquid (MPII) (Example 15) leads to an increase in the stretching stress of the gel.

The ionic liquid-containing hydrogel (Example 16) exhibited a degree of stretching lower than that of the ionic liquid-immersed gel (Example 15), and exhibited a degree of stretching lower than that of the gel of Example 5 as shown in FIG. 13. However, the hydrogel of Example 16 was found to still have a high degree of stretching of more than 500%.

## Claims

1. A hydrogel having a self-supporting property and comprising a silicate salt (A), a polyalkylene glycol (B), and a dispersant (C) for the silicate salt, the hydrogel being **characterized in that**:
the polyalkylene glycol (B) has a weight average molecular weight, number average molecular weight, or viscosity average molecular weight of 500,000 to 20,000,000; and
the amount by mass of the polyalkylene glycol (B) is more than 2% by mass and 20% by mass or less relative to 100% by mass of the hydrogel.

2. The hydrogel having a self-supporting property according to claim 1, wherein the silicate salt (A) is water-swellable silicate salt particles.

3. The hydrogel having a self-supporting property according to claim 2, wherein the water-swellable silicate salt particles are particles of a water-swellable silicate salt selected from the group consisting of smectite, bentonite, vermiculite, and mica.

4. The hydrogel having a self-supporting property according to any one of claims 1 to 3, wherein the polyalkylene glycol (B) is polyethylene glycol or polypropylene glycol.

5. The hydrogel having a self-supporting property according to any one of claims 1 to 4, wherein the dispersant (C) is at least one selected from the group consisting of orthophosphoric acid, pyrophosphoric acid, tripolyphosphoric acid, tetraphosphoric acid, hexametaphosphoric acid, polyphosphoric acid, etidronic acid, alendronic acid, risedronic acid, ibandronic acid, clodronic acid, minodronic acid, pamidronic acid, tiludronic acid, zoledronic acid, 1,2-ethylenediphosphonic acid, poly(meth)acrylic acid, an acrylic acid/maleic acid copolymer, or a completely neutralized or partially neutralized sodium salt, potassium salt, or ammonium salt of any of these acids or the copolymer, sodium hydroxide, hydroxylamine, sodium carbonate, sodium silicate, polyethylene glycol or polypropylene glycol having a weight average molecular weight, number average molecular weight, or viscosity average molecular weight of 200 to 20,000, sodium humate, and sodium ligninsulfonate.

6. The hydrogel having a self-supporting property according to any one of claims 1 to 5, wherein the amount by mass of the silicate salt (A) is 5% by mass to 20% by mass relative to 100% by mass of the hydrogel.

7. The hydrogel having a self-supporting property according to any one of claims 1 to 6, wherein the hydrogel further comprises an ionic liquid (D).

8. A method for producing the hydrogel having a self-supporting property according to any one of claims 1 to 6, the method comprising:
a step of mixing the silicate salt (A), the polyalkylene glycol (B), the dispersant (C), and water or a water-containing solvent; and
a step of causing gelation of the resultant mixture by allowing the mixture to stand still.

9. The method for producing the hydrogel having a self-supporting property according to any one of claims 1 to 6, the method comprising:
a step of mixing two liquids: a liquid A and a liquid B, wherein the liquid A is a mixture of the silicate salt (A), the dispersant (C), and water or a water-containing solvent, or an aqueous solution or aqueous dispersion of the mixture, and the liquid B is a mixture of the polyalkylene glycol (B) and water or a water-containing solvent, or an aqueous solution or aqueous dispersion of the mixture; and
a step of causing gelation of the resultant mixture by allowing the mixture to stand still.

10. The method for producing the hydrogel having a self-supporting property according to claim 8 or 9, wherein the method further comprises, after the gelation step, a step of immersing the resultant gel in a phosphate buffer.

11. The method for producing the hydrogel having a self-supporting property according to claim 8 or 9, wherein the method further comprises, after the gelation step, a step of immersing the resultant gel in an ionic liquid (D).

12. The method for producing the hydrogel having a self-supporting property according to claim 7, the method comprising:
a step of mixing the silicate salt (A), the polyalkylene glycol (B), the dispersant (C), the ionic liquid (D), and water or a water-containing solvent; and
a step of causing gelation of the resultant mixture by allowing the mixture to stand still.

13. The method for producing the hydrogel having a self-supporting property according to claim 7, the method comprising:
a step of mixing two liquids: a liquid A and a liquid B, wherein the liquid A is a mixture of the silicate salt (A), the dispersant (C), and water or a water-containing solvent, or an aqueous solution or aqueous dispersion of the mixture, and the liquid B is a mixture of the polyalkylene glycol (B) and water or a water-containing solvent, or an aqueous solution or aqueous dispersion of the mixture;
a step of mixing the mixture of the liquid A and the liquid B with a liquid C, which is a mixture of the ionic liquid (D) and water or a water-containing solvent, or an aqueous solution or aqueous dispersion of the mixture; and
a step of causing gelation of the resultant mixture by allowing the mixture to stand still.

14. A stretchable hydrogel having a self-supporting property and comprising a silicate salt (A), a polyalkylene glycol (B), and a dispersant (C) for the silicate salt, wherein:
the polyalkylene glycol (B) has a weight average molecular weight, number average molecular weight, or viscosity average molecular weight of 500,000 to 20,000,000;
the amount by mass of the polyalkylene glycol (B) is more than 2% by mass and 20% by mass or less relative to 100% by mass of the hydrogel; and
a quadrangular prism product formed of the hydrogel and having a length of 50 mm or 40 mm, a width of 15 mm, and a thickness of 1 mm can be stretched by 1.1 times or more in a longitudinal direction.

15. A composition for forming a hydrogel having a self-supporting property, the composition comprising:
a silicate salt (A), a polyalkylene glycol (B), and a dispersant (C) for the silicate salt, wherein:
the polyalkylene glycol (B) has a weight average molecular weight, number average molecular weight, or viscosity average molecular weight of 500,000 to 20,000,000, and is contained at least in an amount such that when the hydrogel is formed through contact between the composition and water, the amount by mass of the polyalkylene glycol (B) is more than 2% by mass and 20% by mass or less relative to 100% by mass of the hydrogel.
